# FASCICULE DE BREVET EUROPEEN

(11) **EP 2 749 389 B1**
(45) Date de publication et mention de la délivrance du brevet: **16.12.2015**
(21) Numéro de dépôt: 13198622.6
(22) Date de dépôt: 19.12.2013
(51) Int. Cl.: B29C 41/38, B29C 41/04, B29C 69/00, B29L 22/00, B29C 37/00, B29L 31/00

(54) **Procédé de rotomoulage d'un conteneur pour la collecte de déchets en plusieurs parties, moule pour la mise en oeuvre de ce procédé et conteneur ainsi obtenu**
Schleudergussverfahren für einen Abfallsammelbehälter aus mehreren Teilen, Gussform zur Umsetzung dieses Verfahrens und so erhaltener Behälter
Method for rotational moulding of a container for collecting waste in a plurality of portions, mould for implementing said method and container thus obtained

(30) Priorité: 28.12.2012 FR 1262901
(43) Date de publication de la demande: 02.07.2014
(73) Titulaire: COMPAGNIE PLASTIC OMNIUM, 69007 Lyon (FR)
(72) Inventeur: Troton, Jean, 01800 Meximieux (FR)
(74) Mandataire: Remy, Vincent Noel Paul

(56) Documents cités:
- EP-A1- 0 805 115
- EP-A1- 2 439 037
- WO-A1-2008/113897
- DE-A1- 2 203 297
- US-A- 5 529 481
- US-A1- 2008 277 423

## Description

La présente invention concerne un procédé de rotomoulage d'un conteneur pour la collecte de déchets.

On sait réaliser des conteneurs par rotomoulage par example de DE-A-2,203,297. Ce procédé consiste à introduire de la matière plastique en fines particules de poudre dans un moule chaud délimitant une cavité fermée et à faire tourner ce moule dans différentes positions pour amener, par gravité, les particules de matière plastique à se coller à la paroi intérieure du moule, à y fondre sous l'effet de la chaleur de la paroi et à revêtir cette paroi d'une couche continue de matière plastique. Une fois la matière plastique refroidie, le moule est ouvert et la pièce obtenue par rotomoulage en est extraite.

Le moule peut être constitué de plusieurs parties, ce qui est le cas le plus général, mais il peut arriver que le moule soit en une seule partie, par exemple un moule en forme de cloche que l'on démoule par une ouverture inférieure.

Ce procédé convient particulièrement pour obtenir des pièces de forme complexe, dont le moulage par injection ne serait pas aisé en raison notamment de difficultés de démoulage. Il convient en outre pour des pièces conformées en corps creux, car il permet de les obtenir en une seule opération de moulage, sans assemblage postérieur.

Ainsi, grâce au procédé de rotomoulage, on sait fabriquer des pièces à géométrie particulière en forme de corps creux. Des pièces de ce type sont même en pratique assez volontiers associées à la technique du rotomoulage.

Cependant, des pièces en forme de corps creux ne sont pas aisées à transporter, notamment si leur volume est conséquent. D'un point de vue écologique, un tel transport de matériel creux et encombrant est sujet à discussion.

Dans certains cas, on préfère donc renoncer aux avantages du procédé de rotomoulage et fabriquer des objets volumineux en plusieurs morceaux, que l'on transporte séparément et que l'on assemble sur le lieu d'utilisation de l'objet. Dans ce cas, les différents morceaux sont souvent obtenus par moulage par injection.

C'est le cas en particulier pour les conteneurs de collecte de déchets par apport volontaire, qui sont des pièces en forme de corps creux de gros volume, c'est-à-dire supérieur à 2 m³.

L'invention a pour but de proposer un procédé de rotomoulage qui allie les avantages du rotomoulage en ce qui concerne l'obtention de pièces de forme complexe et les avantages du moulage d'une pièce en plusieurs morceaux, par exemple pour pouvoir la transporter dans de meilleures conditions.

Un objet de l'invention est donc un procédé de rotomoulage d'un objet creux comportant plusieurs morceaux, notamment d'un conteneur pour la collecte de déchets, à l'aide d'un moule de rotomoulage ayant une paroi intérieure délimitant une empreinte de moulage. Ce procédé consiste à disposer, en saillie de la paroi intérieure du moule, au moins une lame séparatrice s'étendant sensiblement perpendiculairement à cette paroi, le long d'une ligne parcourant ladite paroi intérieure et divisant cette paroi intérieure en au moins deux parties correspondant aux morceaux de l'objet creux, puis à introduire de la matière plastique dans le moule et à répartir cette matière plastique sur la paroi intérieure du moule en faisant tourner le moule de sorte que, grâce à la présence de la ou des lames séparatrices, la matière plastique rotomoulée forme, à la périphérie de chaque morceau de l'objet creux, un retour vers l'intérieur qui constitue un rebord d'assemblage avec un morceau adjacent de l'objet creux.

De préférence, la lame séparatrice fait saillie de la paroi intérieure du moule sur une hauteur prédéterminée et la quantité de matière plastique introduite dans le moule est telle que la couche de matière plastique recouvre la paroi intérieure du moule sur une épaisseur plus petite que la hauteur prédéterminée.

Ce procédé permet de fabriquer par rotomoulage tous les morceaux constitutifs d'un même objet creux. Ces morceaux sont séparés les uns des autres du fait que la couche de matière plastique s'interrompt ou se détourne, dans le moule, à l'emplacement de la lame séparatrice. Toutefois, les morceaux de l'objet creux s'imbriquent parfaitement les uns dans les autres du fait qu'ils sont issus d'un même rotomoulage et présentent donc entre eux une parfaite homogénéité de matière, d'épaisseur, de dimensions et de composition résultant des conditions du rotomoulage, en particulier d'humidité.

En outre, les différents morceaux peuvent présenter des formes complexes, difficiles à obtenir par un procédé différent du procédé de rotomoulage.

Ainsi, grâce à l'invention, on peut obtenir un objet creux, par exemple un conteneur pour la collecte de déchets aussi facilement qu'avec le procédé de rotomoulage conventionnel, mais sans avoir à supporter l'inconvénient lié au transport d'objets creux de grand volume, puisque le conteneur obtenu par mise en oeuvre du procédé selon l'invention peut être transporté en plusieurs morceaux (par exemple emboîtés les uns dans les autres), donc en occupant un volume de transport relativement petit.

Un autre avantage du procédé selon l'invention est qu'il n'est pas nécessaire, pour le mettre en oeuvre, de reconcevoir les moules des objets creux déjà existants. Il suffit en effet d'aménager, dans ces moules, un logement pour la ou les lames séparatrices.

Egalement, un tel retour vers l'intérieur de l'objet creux n'est pas visible depuis l'extérieur du conteneur une fois celui-ci assemblé, ce qui confère un aspect esthétique avantageux.

Selon un premier mode de mise en oeuvre du procédé, la lame séparatrice est une bande dont l'épaisseur est de préférence comprise entre quelques millimètres et 2 cm.

Selon un second mode de mise en oeuvre, compatible avec le précédent, la lame séparatrice est une bande de métal, de préférence recouverte de polytétrafluroéthylène (PTFE) ou d'un autre matériau non adhérent avec la matière plastique constituant le conteneur.

Dans une variante, la lame séparatrice a une largeur variable sur sa longueur, qui peut aller de quelques mm à environ 50 mm.

Selon un troisième mode de mise en oeuvre, compatible avec les précédents, la lame séparatrice est montée dans le moule de façon amovible.

Selon un quatrième mode de mise en oeuvre, compatible avec les précédents, le moule est divisé en plusieurs parties qui, assemblées, reconstituent l'empreinte du moule et dont les contours correspondent aux emplacements de la ou des lames séparatrices. Les formes de ces parties du moule sont de préférence telles que les morceaux de l'objet creux qui leur correspondent sont facilement empilables pour leur transport.

Dans ce mode de mise en oeuvre, si la lame séparatrice est une bande, elle peut être pincée entre les contours des différentes parties du moule. Dans ce cas, l'interface entre la lame séparatrice et chaque partie du moule doit être telle que la lame séparatrice assure l'étanchéité du moule. En variante de la forme en bande, la lame séparatrice peut présenter une section en T.

Avantageusement, les parties du moule peuvent être assemblées avec ou sans interposition de lame séparatrice entre elles. Ainsi, on peut soit utiliser le moule sans lame séparatrice pour obtenir un objet creux d'un seul tenant selon un procédé de rotomoulage conventionnel, soit utiliser le moule avec une ou des lames séparatrices, pour obtenir plusieurs parties de l'objet creux, que l'on assemble ensuite pour obtenir cet objet creux. Par exemple, un même moule peut servir à la fois pour une fabrication du conteneur près de son lieu d'utilisation, donc sans transport, et pour une fabrication éloignée du lieu d'utilisation du conteneur, qui nécessite un transport. Un autre avantage de cette double possibilité de fabrication est que toute pièce mécanique destinée à venir s'assembler au conteneur reste la même, que le conteneur soit réalisé en plusieurs parties ou d'un seul tenant. Par exemple, une colonne de remplissage d'un conteneur enterré sera la même, que le conteneur enterré soit réalisé d'un seul tenant ou en plusieurs parties. Un autre exemple de pièce mécanique commune est une structure interne de renfort d'une colonne aérienne, qui sera identique, que la colonne soit réalisée d'un seul tenant ou en plusieurs parties.

Grâce à la présence de la ou des lames séparatrices, la matière plastique rotomoulée forme, à la périphérie de chaque morceau de l'objet creux, un retour vers l'intérieur qui constitue un rebord d'assemblage avec un morceau adjacent de l'objet creux.

L'invention a également pour objet un moule de rotomoulage d'un objet creux notamment d'un conteneur pour la collecte de déchets, ledit moule ayant une paroi intérieure délimitant une empreinte de moulage et, en saillie de cette paroi intérieure et sur une hauteur prédéterminée, au moins une lame séparatrice s'étendant sensiblement perpendiculairement à cette paroi, le long d'une ligne parcourant ladite paroi intérieure et divisant cette paroi intérieure en au moins deux parties.

Dans un mode de réalisation particulier de l'invention, un mécanisme de déplacement de la lame séparatrice est prévu et agencé pour réduire l'effort à fournir par un opérateur devant déplacer ladite lame pour la mettre en place ou la retirer du moule. Un tel mécanisme peut être une genouillère et/ou un vérin.

Dans un mode de réalisation particulier, dans lequel le moule est en deux parties, un organe de maintien de la lame séparatrice est prévu entre les deux parties du moule pour assurer le maintien de la lame séparatrice pendant le moulage ainsi que lors de l'ouverture du moule, pendant démoulage de l'objet rotomoulé, l'ouverture du moule pour le démoulage de l'objet rotomoulé ayant lieu en écartant les deux parties du moule symétriquement de part et d'autre de l'organe de maintien de la lame séparatrice.

Dans ce mode de réalisation, la lame séparatrice remplit une deuxième fonction : lors du démoulage, elle retient l'objet rotomoulé et facilite son décollement de chacune des deux parties du moule.

Ainsi, il est possible d'utiliser un moule selon l'invention pour fabriquer des conteneurs en un seul morceau.

Enfin, l'invention a pour objet un conteneur pour la collecte de déchets, obtenu par mise en oeuvre du procédé décrit ci-dessus ou à l'aide d'un moule de rotomoulage tel que décrit ci-dessus.

L'invention sera mieux comprise à la lecture des figures annexées, qui sont fournies à titre d'exemples et ne présentent aucun caractère limitatif, dans lesquelles :
La figure 1 est une vue en perspective d'un conteneur de collecte.
La figure 2 est une vue en perspective de dessus d'un moule pour la fabrication d'un conteneur selon la figure 1.
La figure 3 est une vue en perspective de côté du moule de la figure 2.
La figure 4 est une section selon IV-IV de la figure 3 avant insertion de la lame séparatrice.
La figure 5 est une vue analogue à la figure 4 lorsque le moulage a lieu sans lame séparatrice.
La figure 6 est une vue analogue à la figure 4 lorsque le moulage a lieu avec la séparatrice.
La figure 7 est une vue analogue à la figure 4 lors du démoulage du conteneur.
La figure 8 c'est une section selon VIII-VIII de la figure 1.

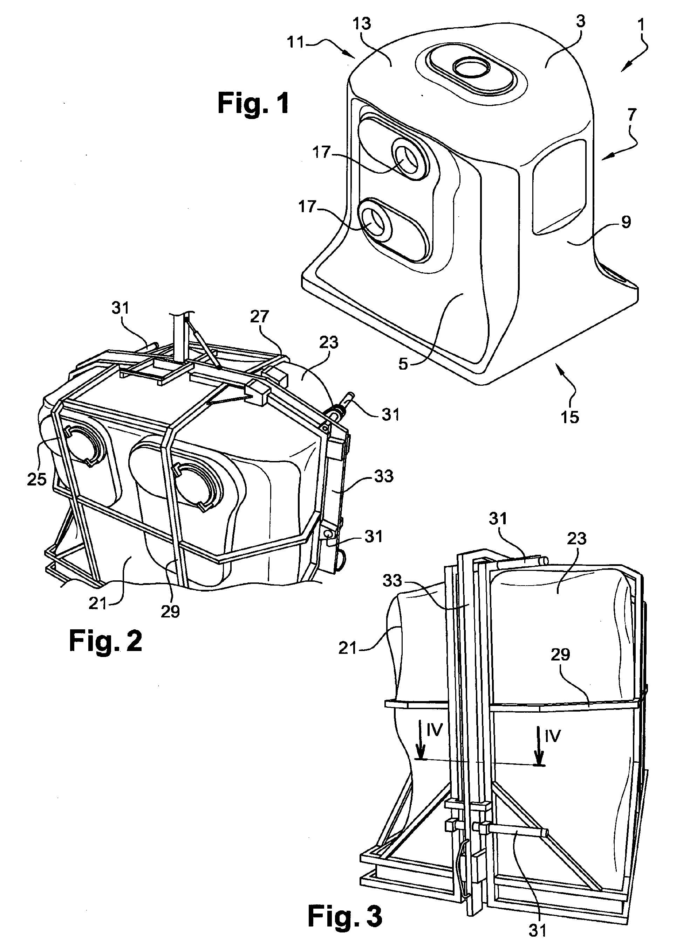

On se réfère maintenant à la figure 1, qui représente un conteneur 1 d'apport volontaire pour la collecte de verre. Ce modèle de conteneur n'est fourni qu'à titre d'exemple et ne présente aucun caractère limitatif, l'invention pouvant être mise en oeuvre pour n'importe quel type de conteneur de collecte.

Ce conteneur 1 comporte une enveloppe 3 de forme complexe, inscrite globalement dans un parallélépipède. Il comporte une paroi avant 5, une paroi arrière 7, une paroi latérale droite 9, une paroi latérale gauche 11, une paroi supérieure 13. A sa base 15, le conteneur ne comporte pas de paroi car des trappes de vidage (non représentées) doivent venir l'obturer. Les parois avant 5 et arrière 7 sont munies d'ouvertures 17 d'introduction de bouteilles ou bocaux en verre, par exemple. La paroi supérieure 13 comporte un passage 19 pour un moyen de suspension (non représenté) du conteneur, permettant son vidage. Les parois latérales 9 et 11 comportent un renfoncement 21 qui remplit une fonction décorative et une fonction de rigidification du conteneur.

Le conteneur 1 est réalisé en polyéthylène. Il peut être réalisé d'un seul tenant, comme cela est connu. Il peut également être obtenu par assemblage de plusieurs morceaux, réalisés grâce au procédé selon l'invention.

La fabrication du conteneur 1 s'effectue à l'aide d'un moule tel que celui représenté sur les figures 2 et 3.

On reconnaît globalement, sur ces figures, la forme générale du conteneur 1. Le moule est ici constitué de deux parties 21 et 23 en fonte d'acier ou en fonte d'aluminium ou encore en tôle. En fonte d'aluminium, le moule présente une épaisseur de 8 mm. Les parois du moule sont recouvertes de PFTE pour contrôler l'adhésion de la matière plastique pendant le rotomoulage. En particulier, la paroi de fond possède une couche anti-adhérente très efficace pour éviter la formation d'une paroi de fond en matière plastique à la base 15 du conteneur pendant le rotomoulage. Les autres parois sont revêtues d'une couche anti-adhérente qui autorise l'adhésion de la matière plastique pendant le rotomoulage mais facilite son décollement lors du démoulage. Les deux parties du moule sont réunies l'une à l'autre par un dispositif d'assemblage en deux moitiés 25 et 27.

Chaque moitié 25, 27 du dispositif d'assemblage forme une sorte de cage faite de tubulures métalliques 29 conformée pour contenir la partie 21, 23 correspondante du moule.

Des attelles 31 relient les deux moitiés 25 et 27 du dispositif d'assemblage pour former le moule de façon étanche, de sorte qu'il puisse recevoir de la matière plastique pulvérulente et être mis en rotation pour répartir cette matière plastique sur sa paroi intérieure.

Sur les figures 2 et 3, on a représenté une lame séparatrice 33 à la jonction entre les deux parties de moule 21 et 23. Cette lame 33 peut être constituée de plusieurs tronçons mais a été représentée d'un seul tenant. Par exemple, la lame 33 peut être en deux tronçons 33a, 33b. Le tronçon 33b se trouve sur la paroi latérale gauche 11 du conteneur et le tronçon 33a s'étend sur la paroi latérale droite 9 et sur la paroi supérieure 13 du conteneur.

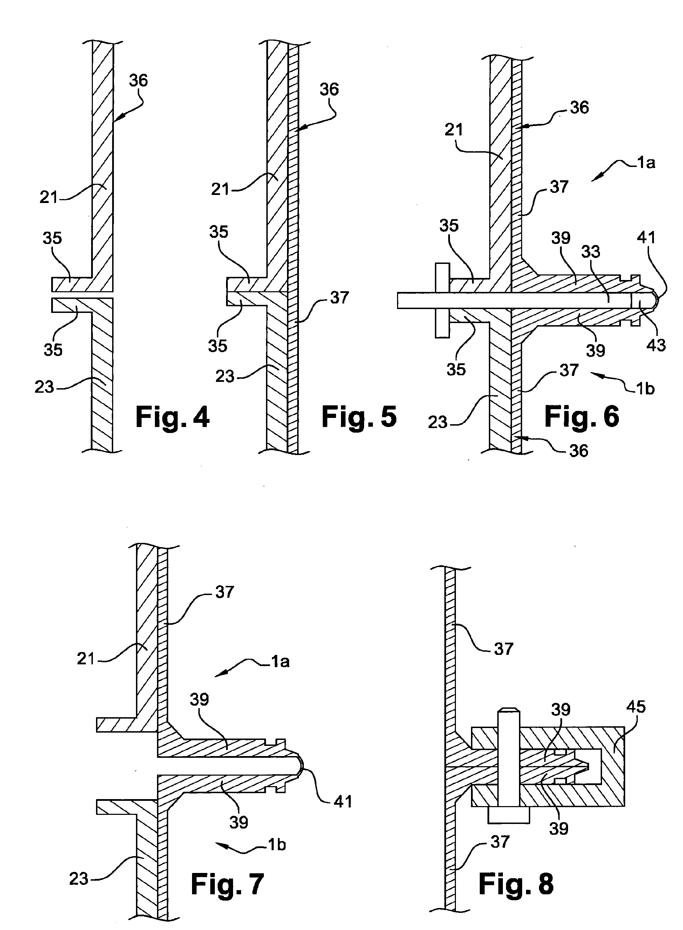

Comme on le voit sur les figures 3 et 4, chacune des parties de moule 21, 23 comporte un rebord externe 35 par lequel elle est maintenue en contact avec l'autre partie grâce au dispositif d'assemblage et a ses attelles 31.

Les deux parties de moule 21 et 23 peuvent être assemblées l'une à l'autre sans interposition de lame séparatrice. Dans ce cas, le moule constitue un moule de rotomoulage conventionnel. Comme l'illustre la figure 5, la matière plastique se répartit dans le moule pendant le rotomoulage sur toute sa paroi intérieure 36, en formant une couche 37 qui recouvre notamment la jonction entre les deux parties 21 et 23.

Si on utilise le moule conformément au procédé selon l'invention, comme illustré sur la figure 6, la lame séparatrice 33 est interposée entre les rebords externes 35 en regard des deux parties 21 et 23, puis les attelles 31 du dispositif d'assemblage sont serrées. La lame séparatrice 33 dépasse alors à l'intérieur du moule en faisant saillie de sa paroi intérieure 36 sur une hauteur H d'environ 4 cm et constitue une barrière entre les parois intérieures des deux parties de moule 21 et 23.

Dans une variante non représentée, la lame séparatrice a une largeur variable sur sa longueur, qui peut aller de quelques mm à environ 50 mm. La plus petite hauteur permet de former une barrière de séparation entre les deux morceaux du conteneur, comme cela va être décrit. La plus grande hauteur permet d'assurer la fixation des morceaux de conteneur entre eux, comme cela va être également décrit.

Lorsque la matière plastique, introduite dans le moule sous forme de poudre, se répartit sur sa paroi intérieure, elle forme une couche continue 37 d'environ 7 à 8 mm d'épaisseur, qui recouvre non seulement la paroi intérieure du moule mais également les faces de la partie de la lame séparatrice 33 faisant saillie dans le moule. De ce fait, la couche 37 de matière plastique forme, à la périphérie de chaque morceaux du conteneur, un bord rentrant 39.

Ce bord rentrant 39 rempli deux fonctions : d'une part, il sert de moyen de fixation pour solidariser entre eux les deux morceaux 1a et 1 b du conteneur 1. D'autre part, il procure une certaine rigidification du conteneur, ce qui peut permettre, si la conception du conteneur et son cahier des charges le permettent, de réduire l'épaisseur de ses parois et donc de diminuer la quantité de matière utilisée pour fabriquer le conteneur.

On voit, sur la figure 6, que la couche 37 continue de matière plastique recouvre également la tranche de la lame séparatrice 33, en formant une fine couche 41. La finesse de la couche 41 peut être accentuée par la présence de matière anti-adhérente 43, telle que du PTFE, sur la tranche de la bande 33.

Pour démouler le conteneur, on desserre les attelles 31 et on écarte légèrement les deux parties de moule 21 et 23, puis on extrait la lame séparatrice 33 (c'est-à-dire chacun de ses tronçons). Les deux empreintes 21 et 23 et la matière plastique se trouvent alors dans la configuration représentée à la figure 7.

Il ne reste plus qu'à séparer les deux morceaux du conteneur 1a et 1 b en découpant la fine couche de matière plastique 41 et à extraire les deux morceaux de conteneur 1a et 1 b, puis à assembler ces deux morceaux entre eux en utilisant leurs bords rentrants 39, par exemple à l'aide de profils en U vissés 45, comme on le voit sur la figure 9.

L'invention n'est pas limitée aux modes de réalisation présentés et d'autres modes de réalisation apparaîtront clairement à l'homme du métier.

## Revendications

1. Procédé de rotomoulage d'un objet creux comportant plusieurs morceaux, en particulier de volume supérieur à 2 m³, notamment d'un conteneur (1) pour la collecte de déchets à l'aide d'un moule de rotomoulage ayant une paroi intérieure (36) délimitant une empreinte de moulage, ledit procédé consistant à disposer, en saillie de la paroi intérieure (36) du moule, au moins une lame séparatrice (33) s'étendant sensiblement perpendiculairement à cette paroi, le long d'une ligne parcourant ladite paroi intérieure (36) et divisant cette paroi intérieure en au moins deux parties correspondant aux morceaux de l'objet creux, puis à introduire de la matière plastique dans le moule et à répartir cette matière plastique sur la paroi intérieure (36) du moule en faisant tourner le moule de sorte que, grâce à la présence de la ou des lames séparatrices, la matière plastique rotomoulée forme, à la périphérie de chaque morceau de l'objet creux, un retour vers l'intérieur qui constitue un rebord d'assemblage avec un morceau adjacent de l'objet creux.

2. Procédé selon la revendication 1, dans lequel la lame séparatrice (33) fait saillie de la paroi intérieure (36) du moule sur une hauteur prédéterminée et la quantité de matière plastique introduite dans le moule est telle que la couche (37) de matière plastique recouvre la paroi intérieure (36) du moule sur une épaisseur plus petite que la hauteur prédéterminée.

3. Procédé selon la revendication 1 ou 2, dans lequel la lame séparatrice (33) est une bande dont l'épaisseur est comprise entre quelques millimètres et 2 cm.

4. Procédé selon la revendication 1, 2 ou 3, dans lequel la lame séparatrice (33) est une bande de métal, de préférence recouverte de polytétrafluroéthylène (PTFE) ou d'un autre matériau non adhérent avec la matière plastique constituant le conteneur.

5. Procédé selon l'une des revendications 1 à 4, dans lequel la lame séparatrice a une largeur variable sur sa longueur, qui peut aller de quelques mm à environ 50 mm.

6. Procédé selon l'une des revendications 1 à 5, dans lequel la lame séparatrice (33) est montée dans le moule de façon amovible.

7. Moule de rotomoulage d'un objet creux comportant plusieurs morceaux, en particulier de volume supérieur ou égal à 2 m³, notamment d'un conteneur pour la collecte de déchets, ayant une paroi intérieure (36) délimitant une empreinte de moulage, **caractérisé en ce qu'**il possède, en saillie de cette paroi intérieure et sur une hauteur prédéterminée, au moins une lame séparatrice (33) s'étendant sensiblement perpendiculairement à cette paroi, le long d'une ligne parcourant ladite paroi intérieure et divisant cette paroi intérieure en au moins deux parties correspondant aux morceaux de l'objet creux et **en ce que** grâce à la présence de la ou des lames séparatrices, la matière plastique rotomoulée forme, à la périphérie de chaque morceau de l'objet creux, un retour vers l'intérieur qui constitue un rebord d'assemblage avec un morceau adjacent de l'objet creux.

8. Moule selon la revendication précédente moule étant divisé en plusieurs parties (21, 23) qui, assemblées, reconstituent l'empreinte du moule dont les contours correspondent aux emplacements de la ou des lames séparatrices (33).

9. Moule selon la revendication 7 ou 8, dans lequel est prévu un mécanisme de déplacement de la lame séparatrice agencé pour réduire l'effort à fournir par un opérateur devant déplacer ladite lame pour la mettre en place ou la retirer du moule, ledit mécanisme comprenant une genouillère et/ou un vérin.

10. Moule selon l'une quelconque des revendications 7 à 9, constitué de deux parties, comprenant un organe de maintien de la lame séparatrice entre les deux parties du moule pour assurer le maintien de la lame séparatrice pendant le moulage ainsi que lors de l'ouverture du moule, pendant démoulage de l'objet rotomoulé, ledit moule étant agencé pour que lors de son ouverture, le démoulage de l'objet rotomoulé ait lieu en écartant les deux parties du moule symétriquement de part et d'autre de l'organe de maintien de la lame séparatrice.

11. Conteneur (1) pour la collecte de déchets, ledit conteneur comportant plusieurs morceaux fabriqués au cours d'un procédé de rotomoulage selon l'une quelconque des revendications 1 à 6 et le conteneur ayant un volume supérieur à 2 m³.

## Patentansprüche

1. Verfahren zum Rotationsformen eines Hohlkörpers, der mehrere Teile aufweist, insbesondere mit einem Volumen, das größer als 2 m³ ist, insbesondere eines Behälters (1) zum Sammeln von Abfällen mit Hilfe eines Rotationsformwerkzeugs mit einer Innenwand (36), die einen Formhohlraum begrenzt, wobei das Verfahren in Folgendem besteht: Anordnen, von der Innenwand (36) des Formwerkzeugs vorspringend, mindestens einer Trennplatte (33), die sich im Wesentlichen senkrecht zu dieser Wand erstreckt, entlang einer Linie, welche die Innenwand (36) durchläuft und diese Innenwand in mindestens zwei Teile unterteilt, die den Teilen des Hohlkörpers entsprechen, dann Einbringen des Kunststoffs in das Formwerkzeug und Verteilen dieses Kunststoffs auf der Innenwand (36) des Formwerkzeugs, indem das Formwerkzeug gedreht wird, so dass, aufgrund des Vorhandenseins der Trennplatte oder der Trennplatten, der rotationsgeformte Kunststoff, um Umfang jedes Teils des Hohlkörpers, einen Rücklauf nach innen bildet, der einen Rand für das Zusammenfügen mit einem benachbarten Teil des Hohlkörpers bildet.

2. Verfahren nach Anspruch 1, bei dem die Trennplatte (33) von der Innenwand (36) des Formwerkzeugs über eine vorbestimmte Höhe vorspringt und die in das Formwerkzeug eingebrachte Kunststoffmenge dergestalt ist, dass die Kunststoffschicht (37) die Innenwand (36) des Formwerkzeugs über eine Dicke bedeckt, die kleiner als die vorbestimmte Höhe ist.

3. Verfahren nach Anspruch 1 oder 2, bei dem die Trennplatte (33) ein Band ist, dessen Dicke zwischen einigen Millimetern und 2 cm beträgt.

4. Verfahren nach Anspruch 1, 2 oder 3, bei dem die Trennplatte (33) ein Metallband ist, das vorzugsweise mit Polytetrafluorethylen (PTFE) oder einem anderen Material beschichtet, das nicht an dem Kunststoff, aus dem der Behälter gebildet ist, haftet.

5. Verfahren nach einem der Ansprüche 1 bis 4, bei dem die Trennplatte eine Breite hat, die über ihre Länge variabel ist und von einigen mm bis etwa 50 mm betragen kann.

6. Verfahren nach einem der Ansprüche 1 bis 5, bei dem die Trennplatte (33) in dem Formwerkzeug lösbar montiert ist.

7. Formwerkzeug zum Rotationsformen eines Hohlkörpers, der mehrere Teile aufweist, insbesondere mit einem Volumen, das größer oder gleich 2 m³ ist, insbesondere eines Behälters zum Sammeln von Abfällen mit einer Innenwand (36), die einen Formhohlraum begrenzt, **dadurch gekennzeichnet, dass** es, von dieser Innenwand und über eine vorbestimmte Höhe vorspringend, mindestens eine Trennplatte (33) aufweist, die sich im Wesentlichen senkrecht zu dieser Wand erstreckt, entlang einer Linie, welche die Innenwand durchläuft und diese Innenwand in mindestens zwei Teile unterteilt, die den Stücken des Hohlkörpers entsprechen, und dass, aufgrund des Vorhandenseins der Trennplatte oder der Trennplatten, der rotationsgeformte Kunststoff, um Umfang jedes Teils des Hohlkörpers, einen Rücklauf nach innen bildet, der einen Rand für das Zusammenfügen mit einem benachbarten Teil des Hohlkörpers bildet.

8. Form nach dem vorhergehenden Anspruch, wobei das Formwerkzeug in mehrere Teile (21, 23) unterteilt ist, die, zusammengefügt, den Formhohlraum des Formwerkzeugs bilden und deren Konturen den Lagen der Trennplatte oder der Trennplatten (33) entsprechen.

9. Form nach Anspruch 7 oder 8, wobei ein Mechanismus zum Bewegen der Trennplatte vorgesehen ist, der eingerichtet ist, um die Kraft zu reduzieren, die von einem Benutzer bereitzustellen ist, der die Platte bewegen muss, um sie einzusetzen oder sie aus der Form zu entnehmen, wobei der Mechanismus ein Kniegelenk und/oder einen Zylinder umfasst.

10. Formwerkzeug nach einem der Ansprüche 7 bis 9, das aus zwei Teilen besteht und ein Organ umfasst zum Halten der Trennplatte zwischen den zwei Teilen des Formwerkzeugs, um den Halt der Trennplatte während des Formens sowie beim Öffnen des Formwerkzeugs, während des Entformens des rotationsgeformten Körpers, sicherzustellen, wobei das Formwerkzeug eingerichtet ist, damit bei seinem Öffnen das Entformen des rotationsgeformten Körpers erfolgt, indem die zwei Teile des Formwerkzeugs symmetrisch beiderseits des Organs zum Halten der Trennplatte aufgespreizt werden.

11. Behälter (1) zum Sammeln von Abfällen, wobei der Behälter mehrere Teile aufweist, die im Laufe eines Rotationsformverfahrens nach einem der Ansprüche 1 bis 6 hergestellt werden, und wobei der Behälter ein Volumen hat, das größer als 2 m³ ist.

## Claims

1. Method for rotationally moulding a hollow object comprising several pieces, in particular of volume greater than 2 m³, especially a waste collection container (1) by means of a rotationally moulding mould having an inner wall (36) delimiting a moulding cavity, said method consisting in disposing, in a way projecting from the inner wall (36) of the mould, at least one separating slice (33) extending substantially perpendicular to this wall, along a line going through said inner wall (36) and dividing this inner wall into at least two parts corresponding to the pieces of the hollow object, then in introducing plastic material into the mould and spreading this plastic material on the inner wall (36) of the mould by rotating the mould so that, thanks to the presence of the separating slice(s), the rotationally-moulded plastic material forms, on the periphery of each piece of the hollow object, a return towards the inside which forms a border for assembling with an adjacent piece of the hollow object.

2. Method according to claim 1, wherein the separating slice (33) projects from the inner wall (36) of the mould over a predetermined height and the quantity of the plastic material introduced into the mould is such that the layer (37) of plastic material covers the inner wall (36) of the mould over a thickness smaller than the predetermined height.

3. Method according to claim 1 or 2, wherein the separating slice (33) is a strip whose thickness is between a few millimetres and 2 cm.

4. Method according to claim 1, 2 or 3, wherein the separating slice (33) is a metal strip, preferably covered with polytetrafluoroethylene (PTFE) or another material which does not stick to the plastic material forming the container.

5. Method according to one of claims 1 to 4, wherein the width of the separating slice varies along its length, and can range from a few mm to about 50 mm.

6. Method according to one of claims 1 to 5, wherein the separating slice (33) is removably mounted in the mould.

7. Mould for rotationally moulding a hollow object comprising several pieces, in particular of volume greater than or equal to 2 m³, especially a waste collection container, having an inner wall (36) delimiting a moulding cavity, **characterised in that** it possesses, in a way projecting from this inner wall and over a predetermined height, at least one separating slice (33) extending substantially perpendicular to this wall, along a line going through said inner wall and dividing this inner wall into at least two parts corresponding to the pieces of the hollow object and **in that** thanks to the presence of the separating slice(s), rotationally-moulded plastic material forms, on the periphery of each piece of the hollow object, a return towards the inside which forms a border for assembling with an adjacent piece of the hollow object.

8. Mould according to the preceding claim, the mould being divided into several parts (21, 23) which, assembled, reconstitute the mould cavity and whose contours correspond to the position(s) of the separating slice(s) (33).

9. Mould according to claim 7 or 8, wherein a mechanism of moving of the separating slice is provided, which is arranged to reduce the required force by an operator before moving said slice so as to put it in place in the mould or remove it out of the mould, said mechanism comprising a toggle joint and/or a cylinder.

10. Mould according to any one of claims 7 to 9, consisting of two parts, comprising a member for holding the separating slice between the two parts of the mould to ensure the holding of the separating slice during moulding and when opening the mould, during demoulding of the rotationally-moulded object, said mould being arranged so that when it is being opened, the rotationally-moulded object is demoulded by separating the two parts of the mould symmetrically on either side of the member for holding the separating slice.

11. Waste collection container (1), said container comprising several pieces manufactured during a method for rotationally moulding according to any one of claims 1 to 6 and the container having a volume greater than 2 m³.
